# EUROPEAN PATENT APPLICATION

(11) **EP 4 744 934 A1**
(43) Date of publication of application: **20.05.2026**
(21) Application number: 24917304.8
(22) Date of filing: 02.12.2024
(51) Int. Cl.: B60L 3/00, H02J 7/00, H01M 10/42, B60R 16/023

(54) **BATTERY MANAGEMENT SYSTEM AND BATTERY MANAGEMENT METHOD**

(30) Priority: 08.01.2024 KR 20240002631
(71) Applicant: LG Energy Solution, Ltd., Seoul 07335 (KR)
(72) Inventor: CHOI, Jang Hyeok, Daejeon 34122 (KR); CHOI, Jae Hong, Daejeon 34122 (KR); JANG, Dong Kwan, Daejeon 34122 (KR); KIM, Dong Hyeon, Daejeon 34122 (KR)
(74) Representative: Plasseraud IP
(86) International application number: PCT/KR2024/019460
(87) International publication number: WO 2025/150707

(57) **Abstract**

Disclosed are a battery management system and a battery management method. The battery management system includes: a battery monitoring IC (BMIC) for measuring a state of a battery; a processor for controlling an overall operation of the battery management system; a transceiver for recognizing the measured state of the battery and delivering the recognized state of the battery to the processor; and a power management circuit for providing power to the processor, in which the processor includes a first terminal (VDDS_PowerControl) that outputs a first signal that controls a first transistor, and provides a VDDS signal for determining an operation of a low-power mode by controlling the first transistor by using the first signal.

## Description

### [Technical Field]

### CROSS-REFERENCE TO RELATED APPLICATION

This application claims priority to and the benefit of Korean Patent Application No. 10-2024-0002631 filed in the Korean Intellectual Property Office on January 8, 2024, the entire contents of which are incorporated herein by reference.

The present disclosure relates to a battery management system and a battery management method.

### [Background Art]

When a fire breaks out in electric vehicles, the fire in the electric vehicles is very difficult to be extinguished until the electric vehicle is burned down, unlike internal combustion engine vehicles. In addition, electric vehicles, unlike combustion engine vehicles, are characterized by burning in an instant, and when the rescue time is delayed, casualties may increase. The reason for this situation is the phenomenon of 'thermal runaway' in which the temperature of the battery soars above 1,000 degrees.

Research and development are being conducted to detect the battery thermal runaway phenomenon in advance. A method of predicting the battery thermal runaway phenomenon in advance by collecting battery data, such as temperature and voltage of the battery, and analyzing changes in the collected battery data has been widely used.

However, in a charge state in which the battery is charged with an external power source, a battery management system (BMS) is in a sleep mode or a shut down mode. Therefore, the BMS cannot collect battery data and predict the thermal runaway of the battery in advance. That is, since the battery thermal runaway phenomenon is not detected in advance, most of the fire occurrences related to the battery occur when the battery is charged.

### [Disclosure]

### [Technical Problem]

The present disclosure attempts to provide a battery management system and a battery management method that are capable of accurately diagnosing thermal runaway of a battery even when the battery is charged with power of an external charger or when the battery management system (BMS) is in sleep mode because a higher system (e.g., automobiles, energy storage systems) in which the battery is mounted is not running.

### [Technical Solution]

An exemplary embodiment of the present disclosure provides a battery management system including: a battery monitoring IC (BMIC) for measuring a state of a battery; a processor for controlling an overall operation of the battery management system; a transceiver for recognizing the measured state of the battery and delivering the recognized state of the battery to the processor; and a power management circuit for providing power to the processor, in which the processor includes a first terminal that outputs a first signal that controls a first transistor, and provides a power signal for determining an operation of a low-power mode by controlling the first transistor by using the first signal.

In some exemplary embodiments, the processor may further include a second terminal outputting a second signal for controlling the second transistor, and controls the second transistor by using the second signal to change a resistance value connected to a third terminal indicating whether to use the low power mode.

In some exemplary embodiments, a value of a signal of the third terminal may be detected when a voltage level of the power signal transitions.

In some exemplary embodiments, when an unintended fault occurs, a signal of a fourth terminal of the transceiver may transition from a second voltage level to a first voltage level, and the processor, the transceiver, and the BMIC may wake up.

In some exemplary embodiments, the second signal output from the second terminal may transition from an OFF state to an ON state after the processor, the transceiver, and the BMIC wake up, and a resistance value connected to the third terminal may be changed to a state in which 0 kΩ is connected.

In some exemplary embodiments, while the resistance value connected to the third terminal is in the state in which 0 kΩ is connected, the first signal output from the first terminal may transition from the OFF state to the ON state, and be changed so that no voltage is applied to a power terminal.

In some exemplary embodiments, the first signal output from the first terminal may transition from an ON state to an OFF state, a voltage may be applied to the power terminal again, when the voltage is applied to the power terminal again, the value of the third terminal may be captured, and the battery management system may be set not to use the low power mode by the captured value.

In some exemplary embodiments, the second signal output from the second terminal may return from the ON state to the OFF state, and a resistance value connected to the third terminal may be changed to a state in which 20 kΩ is connected.

In some exemplary embodiments, when a low-power mode entry command occurs, a signal of a fifth terminal of the transceiver, which is provided with an output indicating whether the processor is in a normal operation state or a low-power mode entry state, may transition from a first voltage level to a second voltage level, and the processor, the transceiver, and the BMIC may enter the low power mode again.

Another exemplary embodiment of the present disclosure provides a battery management method by a battery management system, the battery management system including: a battery monitoring IC (BMIC) for measuring a state of a battery; a processor for controlling an overall operation of the battery management system, and including a first terminal outputting a first signal controlling a first transistor and a second terminal outputting a second signal a second transistor; a transceiver for recognizing the measured state of the battery and delivering the recognized state of the battery to the processor; and a power management circuit for providing power to the processor, the battery management method comprising: providing, by the processor, a power signal for determining an operation of a low-power mode by controlling the first transistor by using the first signal; and changing a resistance value connected to a third terminal indicating whether to use the low power mode by controlling the second transistor by using the second signal.

In some exemplary embodiments, a value of a signal of the third terminal may be detected when a voltage level of the power signal transitions.

In some exemplary embodiments, the battery management method may further include: when an unintended fault occurs, transitioning a signal of a fourth terminal of the transceiver from a second voltage level to a first voltage level; and waking up the processor, the transceiver, and the BMIC.

In some exemplary embodiments, the battery management method may further include: transitioning the second signal output from the second terminal transitions from an OFF state to an ON state after the processor, the transceiver, and the BMIC wake up; and changing a resistance value connected to the third terminal to a state in which 0 kΩ is connected.

In some exemplary embodiments, the battery management method may further include: while the resistance value connected to the third terminal is in the state in which 0 kΩ is connected, transitioning the first signal output from the first terminal from the OFF state to the ON state; and changing so that no voltage is applied to a power terminal.

In some exemplary embodiments, the battery management method may further include: transitioning the first signal output from the first terminal from an ON state to an OFF state; applying a voltage to the power terminal again; when the voltage is applied to the power terminal again, capturing the value of the third terminal; and setting the battery management system not to use the low power mode by the captured value.

In some exemplary embodiments, the battery management method may further include: returning the second signal output from the second terminal from the ON state to the OFF state again; and changing a resistance value connected to the third terminal to a state in which 20 kΩ is connected.

In some exemplary embodiments, the battery management method may further include: when a low-power mode entry command occurs, transitioning a signal of a fifth terminal of the transceiver, which is provided with an output indicating whether the processor is in a normal operation state or a low-power mode entry state, from a first voltage level to a second voltage level; and entering the processor, the transceiver, and the BMIC the low power mode again.

### [Advantageous Effects]

According to the exemplary embodiments, even when the BMS is in the sleep mode, it is possible to accurately diagnose the thermal runaway of the battery to reduce casualties and property damage. In particular, it is possible to solve the problem of not entering the sleep mode again after waking up in the low power mode due to unintended faults, such as loss of communication and connector damage, not by cell voltage and temperature changes. In addition, by solving this problem, it is possible to prevent the vehicle's lead storage battery from being discharged due to the failure to enter the sleep mode.

### [Description of the Drawings]

FIG. 1 is a circuit diagram for illustrating a battery management system according to an exemplary embodiment.
FIG. 2 is a timing diagram for illustrating an operation of the battery management system according to the exemplary embodiment.
FIG. 3 is a timing diagram for illustrating the operation of the battery management system according to the exemplary embodiment.
FIG. 4 is a timing diagram for illustrating the case where low power mode entry disallowance a due to an unintended fault occurs.
FIG. 5 is a timing diagram for illustrating the operation of the battery management system according to the exemplary embodiment.

### [Mode for Invention]

Hereinafter, an exemplary embodiment disclosed the present specification will be described in detail with reference to the accompanying drawings, and the same or similar constituent factor is denoted by the same reference numeral regardless of a reference numeral, and a repeated description thereof will be omitted. Suffixes, "module" and and/or "unit" for a constituent element used for the description below are given or mixed in consideration of only easiness of the writing of the specification, and the suffix itself does not have a discriminated meaning or role. In describing the exemplary embodiment disclosed in the present disclosure, when it is determined that detailed description relating to well-known functions or configurations may make the subject matter of the exemplary embodiment disclosed in the present disclosure unnecessarily ambiguous, the detailed description will be omitted. Further, the accompanying drawings are provided for helping to easily understand exemplary embodiments disclosed in the present specification, and the technical spirit disclosed in the present specification is not limited by the accompanying drawings, and it will be appreciated that the present disclosure includes all of the modifications, equivalent matters, and substitutes included in the spirit and the technical scope of the present disclosure.

Terms including an ordinary number, such as first and second, are used for describing various components, but the components are not limited by the terms. The terms are used only to discriminate one component from another component.

It should be understood that when one constituent element referred to as being "coupled to" or "connected to" another constituent element, one constituent element may be directly coupled to or connected to the other constituent element, but intervening elements may also be present. In contrast, when one constituent element is "directly coupled to" or "directly connected to" another constituent element, it should be understood that there are no intervening element present.

In the present application, it will be appreciated that terms "including" and "having" are intended to designate the existence of characteristics, numbers, operations, operations, components, and components described in the specification or a combination thereof, and do not exclude a possibility of the existence or addition of one or more other characteristics, numbers, operations, operations, components, and components, or a combination thereof in advance.

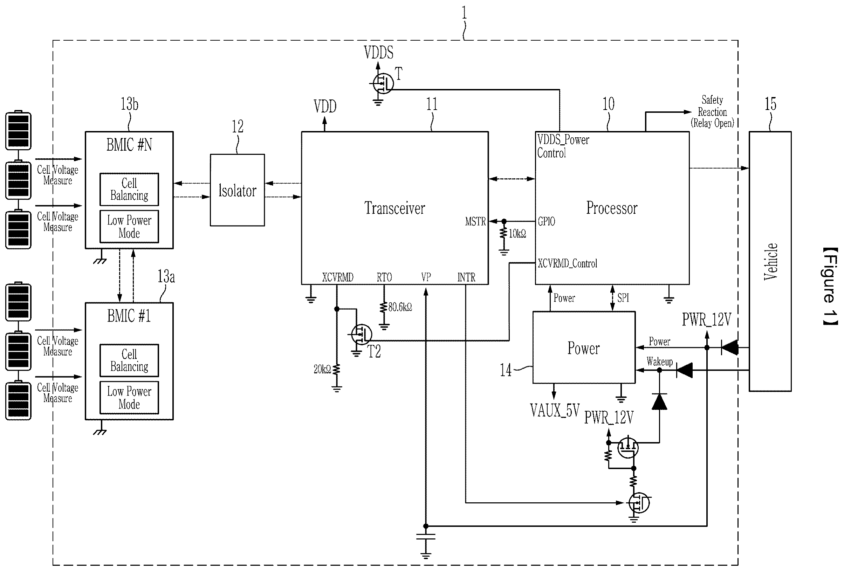

FIG. 1 is a circuit diagram for illustrating a battery management system according to an exemplary embodiment.

Referring to FIG. 1, a battery management system (BMS) 1 according to an exemplary embodiment may include a processor 10, a transceiver 11, an isolator 12, battery monitoring ICs (BMIC) 13a and 13b, and a power management circuit 14.

The processor 10 may control the overall operation of the battery management system 1 and perform functions necessary for battery management. The processor 10 may, for example, continuously monitor the voltage, current, temperature, etc. of a battery cell, perform cell balancing to adjust a voltage difference between the battery cells, or detect a situation that may damage the battery, such as overcharging, overdischarging, and overheating, to take protective measures. In addition, the processor 10 may predict, for example, the state, life, and charging time of the battery based on the data monitored for the battery, evaluate and diagnose the state, and process communication with other external devices. In some exemplary embodiments, the processor 10 may be implemented as a microcontroller unit (MCU).

The battery may have a discharge state, a charge state, or an idle state. The discharge state is a state in which the battery is discharged by supplying power to an external device (e.g., a load), the charge state is a state in which the battery is charged by receiving power from an external device (e.g., a charger), and the idle state may be a state in which the battery and the external device are electrically connected but no power is transmitted. In the discharge state of the battery, the battery management system 1 may operate in an operating mode that performs a set logic to check the state of the battery and safely operate, and in the charge state and the idle state of the battery, the battery management system 1 may operate in a sleep mode in which logic is not performed. However, it is difficult to prepare for a fire of the battery in advance because the state of the battery cannot be monitored while the battery management system 1 is in the sleep mode. By improving this problem, in the present exemplary embodiment, the battery management system 1 may operate in a low power mode in which the battery state is monitored by periodically waking up to prevent thermal runaway, heat propagation, and the like in the charge state and the idle state.

The battery management system 1 operates in a low-power mode in a charge state and an idle state, and periodically wakes up to monitor parameters, such as cell over temperature (OT), UV (under voltage), and temperature differential (Delta T) for the battery. Here, cell OT is a parameter indicating that the battery cell is overheated and the temperature thereof exceeds a safe operating range, UV is a parameter indicating an over-discharge state in which the voltage of the battery cell falls below the normal operating range, and Delta T is a parameter indicating a temperature difference between battery cells.

When it is determined that there is no abnormality in the corresponding parameter value, the battery management system 1 may repeatedly enter the sleep mode again and wake up again to monitor the parameter in the next cycle. Specifically, when there is no abnormality in the corresponding parameter value, the transceiver 11 and the BMICs 13a and 13b periodically repeat wake-up and sleep, and the processor 10 maintains the sleep state. When it is determined that there is abnormality in the corresponding parameter value that may predict the fire risk of the battery, the processor 10, the transceiver 11, and the BMICs 13a and 13b are all woken up, and the processor 10 may notify the electronic control unit (ECU) of the vehicle 15 of the abnormal state of the battery through controller area network communication or the like, perform a safety reaction, such as opening a relay to disconnect the electrical connection with an external device.

However, in addition to the case where an abnormal state of the battery is detected, the processor 10, the transceiver 11, and the BMICs 13a and 13b may all wake up due to other factors. For example, the processor 10, the transceiver 11, and the BMICs 13a and 13b may all wake up due to loss of communication, damage to the connector, or the like. In the present specification, in order to prevent for a battery fire, a factor that stops the sleep mode according to the battery state is expressed as an "intended fault," and a factor that stops the sleep mode as a factor other than the cause symptom of the battery fire is expressed as an "unintended fault."

When the unintended fault occurs, the battery management system 1 needs to enter the low power mode again, and the battery management system 1 fails to enter the low power mode, there is a risk of wasting the battery or discharging the lead battery of the vehicle in the worst case.

The processor 10 may control a case in which the battery management system 1 woken up by the unintended fault described above cannot enter a low power mode. This will be described in detail below.

The transceiver 11 may recognize the state of the BMICs 13a and 13b and perform an operation of waking up the processor 10 or the power management circuit 14 therefrom. For example, the transceiver 11 may receive the accumulated battery state from the BMIC 13a to the BMIC 13b. When receiving an alarm that there is a problem with the battery state, the transceiver 11 may output the interrupt signal INTR to wake up the power management circuit 14. Subsequently, the woken-up power management circuit 14 may wake up the processor 10. Although FIG. 1 illustrates that the transceiver 11 outputs an interrupt signal INTR to the power management circuit 14, unlike the illustration, the transceiver 11 may directly wake up the processor 10 by outputting the interrupt signal INTR to the processor 10.

The isolator 12 may perform isolation on a circuit area including the processor 10, the transceiver 11, and the power management circuit 14 in the battery management system 1, and a circuit area including the BMICs 13a and 13b. Here, the processor 10, the transceiver 11, and the power management circuit 14 may belong to a master BMS or a battery pack control module (BPCM) that diagnoses a state of battery, such as voltage, current, and temperature, and communicates with the vehicle 15. The isolator 12 and the BMICs 13a and 13b may belong to a slave BMS (Slave BMS) or a cell supervisory circuit. In some exemplary embodiments, the isolator 12 may be implemented using a transformer or a capacitor.

Each of the BMICs 13a and 13b may measure a plurality of battery cell voltages for a plurality of electrically connected battery cells, perform cell balancing on a plurality of battery cells, and perform temperature measurement using a general purpose input/output (GPIO). In particular, the BMICs 13a and 13b may perform low power mode operations by themselves. Specifically, even in the sleep mode, the BMICs 13a and 13b may wake up at a preset period to detect a change in a cell voltage, a temperature of a cell, a change in a cell temperature increase rate, and the like, and generate an alarm when the detected value exceeds a predetermined threshold. In some exemplary embodiments, the BMICs 13a and 13b are connected by a daisy chain, so that an alarm generated by the BMIC 13a is transmitted to the BMIC 13b, accumulated with an alarm generated by the BMIC 13b, and transmitted to the processor 10 through the transceiver 11. The processor 10 may finally detect an abnormal state of the battery based on the alarm.

In some exemplary embodiments, the BMICs 13a and 13b may detect battery voltage fluctuations by repeatedly waking up in the sleep mode. When the battery voltage fluctuation exceeds a predetermined threshold, the BMICs 13a and 13b may perform cell balancing. Cell balancing may be performed on a single cell or a specific cell by, for example, a direct current (DC) method or a pulse width modulation (PWM) method. When the cell balancing ends after a certain period of time, information on cell balancing progress from the lowermost BMIC 13a to the uppermost BMIC 13b may be transmitted to the transceiver 11. When the transceiver 11 receives an alarm that there is a problem with the battery state, the power management circuit 14 or the processor 10 may be woken up through a line through which the interrupt signal INTR is transmitted. The processor 10 may finally detect an abnormal state of the battery, notify the ECU of the vehicle 15 of the abnormal battery state through CAN within a predetermined time, or perform a safety reaction. When there is no abnormality in the battery, the battery management system 1 may return to the sleep mode.

In the low power mode, the BMICs 13a and 13b are woken up according to a preset measurement period (e.g., 1 second to 32 seconds) to monitor parameters, such as cell OT, UV, and Delta T, and when it is determined that there is abnormality, the processor 10 is woken up to take safety measures before accidents, such as thermal runaway or thermal propagation, occur. The measurement period of the BMICs 13a and 13b may be set through register setting by software, and the measurement period of the transceiver 11 may be set by using a resistance to overload (RTO) resistor without using a register. In the present exemplary embodiment, the measurement period of the BMICs 13a and 13b may be set in the range of 1 second to 32 seconds, and the measurement period of the transceiver 11 may be set to 48 seconds by using an 80.6 kΩ resistor to the RTO terminal.

The transceiver 11 may receive power through a VP terminal and a VDD terminal. Power provided to the VP terminal may be constant power PWR_12V for operating even in the low power mode, and power provided to the VDD terminal may be power VAUX_5V for communication. Meanwhile, the transceiver 11 may include an XCVRMD terminal. A 20 kΩ resistor may be connected to the XCVRMD terminal in case of using the low power mode, and 0 kΩ resistor may be connected to the XCVRMD terminal in case of not using the low power mode. Meanwhile, the transceiver 11 may include an MSTR terminal. The MSTR terminal may be connected to the GPIO terminal of the processor 10. An output from the GPIO terminal of the processor 10 may indicate whether the processor 10 is in a normal operation state or in a low power mode.

The processor 10 may include a VDDS_PowerControl terminal. The VDDS_PowerControl terminal outputs a signal for controlling the transistor T1, and by controlling the transistor T1, the power VDDS for determining the operation of the low power mode may be selectively provided. One end of the transistor T1 may be connected to the ground, and the other end of the transistor T1 may be involved in the VDDS signal level. When the transistor T1 is turned on, the voltage level of the VDDS signal may transition to the ground level. When the voltage level of the VDDS signal transitions, a signal of XCVRMD of the transceiver 11 may be detected. Meanwhile, the processor 10 may include an XCVRMD_Control terminal. The XCVRMD_Control terminal outputs a signal for controlling the transistor T2, and by controlling the transistor T2, the XCVRMD terminal may be connected to a 20 kΩ resistor or 0 kΩ.

Hereinafter, a detailed method for controlling the case where the battery management system cannot enter the low power mode due to an unintended fault will be described based on the circuit configuration of the battery management system as described above.

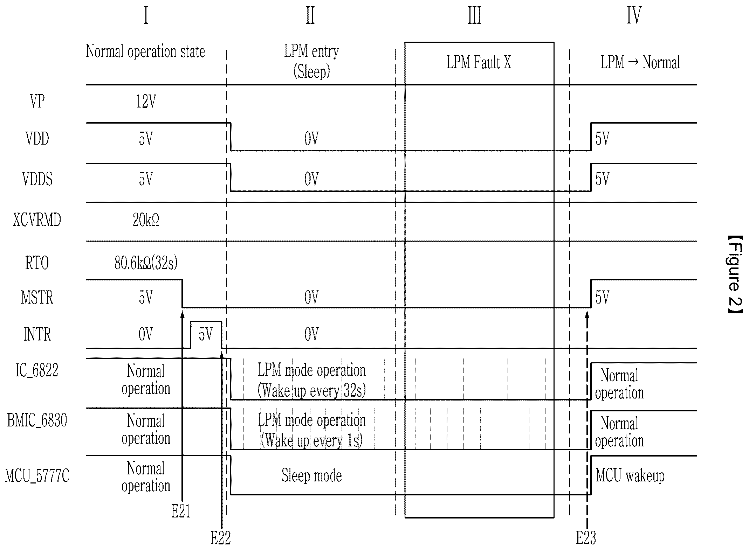

FIG. 2 is a timing diagram for illustrating an operation of the battery management system according to the exemplary embodiment.

Referring to FIG. 2, the operation of the battery management system 1 when a low power mode fault does not occur is illustrated in a timing diagram.

In a first section I, 12V may be applied to the VP terminal of the processor 10 as a constant power source, and 5V and 5V may be applied to the VDD terminal and the VDDS terminal, respectively. The XCVRMD terminal of the transceiver 11 is set to use a low-power mode while being connected to a 20 kΩ resistor, and the RTO terminal of the transceiver 11 is set to read data in units of 48 seconds while being connected to an 80.6 kΩ resistor.

The MSTR terminal of the transceiver 11 may initially have a first voltage level (e.g., a voltage level of 5V), and the INTR terminal may initially have a second voltage level (e.g., a voltage level of 0V). The transceiver 11 indicated with "IC_6822," the BMICs 13a and 13b indicated with "BMIC_6830," and the processor 10 indicated with "MCU_5777C" may perform a normal operation. Here, the normal operation may mean an operation in a driving mode that performs a logic set to check a state of a battery and safely operate the battery.

E21 indicates a time point at which a low power mode entry command occurs in the master BMS. At the time point E21, the signal of the MSTR terminal of the transceiver 11 may transition from a first voltage level to a second voltage level. At the same time, the signal of the INTR terminal of the transceiver 11 may transition from the second voltage level to the first voltage level.

E22 indicates a time point at which the master BMS normally confirms the low-power mode-related communication message received from the slave BMS. Specifically, after the low-power mode entry command is transmitted from the processor 10 to the transceiver 11, the slave BMS including the BMICs 13a and 13b may transmit a normal confirmation message indicating that the low-power mode-related communication message has been normally confirmed to the master BMS. At the time point E22, the signal of the INTR terminal of the transceiver 11 may transition from the first voltage level to the second voltage level. Subsequently, the battery management system 1 may enter the low-power mode.

In a second section II, a voltage may not be applied to the VDD terminal and the VDDS terminal of the processor 10. The signal of the MSTR terminal and the signal of the INTR terminal of the transceiver 11 may maintain the second voltage level. Meanwhile, the transceiver 11 indicated with "IC_6822" may wake up every 32 seconds while operating in the low power mode, and the BMICs 13a and 13b indicated with "BMIC_6830" may wake up every 1 second while operating in the low power mode. The processor 10 indicated with "MCU_5777C" may maintain the sleep mode state.

In a third section III, when it is not determined that there occurs a predictable abnormality in the fire risk of the battery, that is, when a fault in the low-power mode does not occur, a voltage is maintained while being not applied to the VDD terminal and the VDDS terminal of the processor 10, and the signal of the MSTR terminal and the signal of the INTR terminal of the transceiver 11 may be maintained at the second voltage level. In addition, the transceiver 11 may wake up every 32 seconds while operating in the low-power mode, the BMICs 13a and 13b may wake up every 1 second, and the processor 10 may continue to maintain the sleep mode.

In a fourth section IV, E23 indicates a time point at which a wake-up caused by an element or cause other than the low power mode fault occurs. In E23, a voltage of 5V may be applied again to the VDD terminal and the VDDS terminal of the processor 10. Since the signal of the MSTR terminal of the transceiver 11 transitions from the second voltage level to the first voltage level and a fault in the low power mode does not occur, the signal of the INTR terminal of the transceiver 11 may maintain the second voltage level as it is. Meanwhile, the transceiver 11 indicated with IC_6822; the BMICs 13a and 13b indicated with "BMIC_6830"; and the processor 10 indicated with "MCU_5777C" may perform the normal operation again.

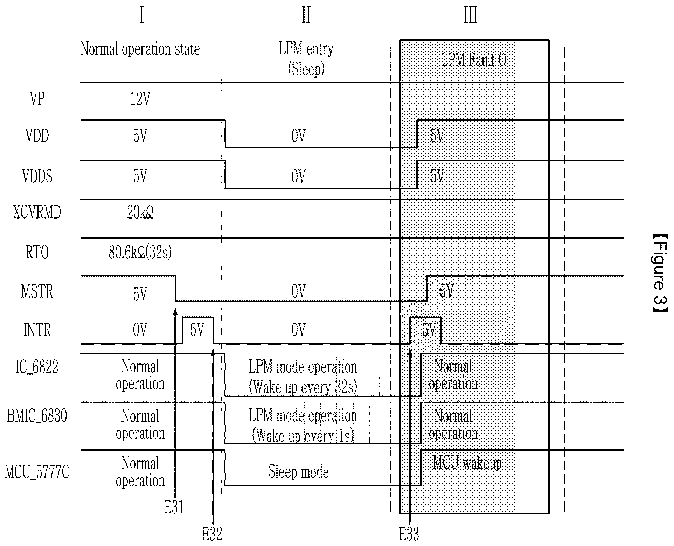

FIG. 3 is a timing diagram for illustrating the operation of the battery management system according to the exemplary embodiment.

Referring to FIG. 3, the operation of the battery management system 1 when the low power mode fault, that is, an intended fault, occurs is illustrated in a timing diagram.

In the first section I, E31 may indicate a time point at which a low-power mode entry command occurs in the master BMS, and E32 may indicate a time point at which the master BMS normally confirms the low-power mode-related communication message received from the slave BMS. That is, E31 and E32 may correspond to E21 and E22 of FIG. 2. The operation of the battery management system 1 in the first section I may be the same as the operation of the battery management system 1 in the first section I of FIG. 2. The second section II may also be the same as the second section II of FIG. 2, and thus a redundant description thereof will be omitted.

In the third section III, E33 indicates a time point at which a wake-up due to a low power mode fault occurs. The low power mode fault may indicate a case in which it is determined that action is necessary before a battery fire occurs due to abnormality in parameter values, such as cell OT, UV, and Delta T. Since the fault in the low power mode occurs in E33, the signal of the INTR terminal of the transceiver 11 may transition from the second voltage level to the first voltage level. The processor 10, the transceiver 11, and the BMICs 13a and 13b may be woken up due to the interrupt signal generated in this way.

That is, the transceiver 11 indicated with "IC_6822", the BMICs 13a and 13b indicated with "BMIC_6830," and the processor 10 indicated with "MCU_5777C" may perform the normal operation again, and a voltage of 5V is applied again to the VDD terminal and the VDDS terminal of the processor 10, and the signal of the MSTR terminal of the transceiver 11 may transition from the second voltage level to the first voltage level. Further, the signal of the INTR terminal of the transceiver 11 may transition from the first voltage level to the second voltage level again.

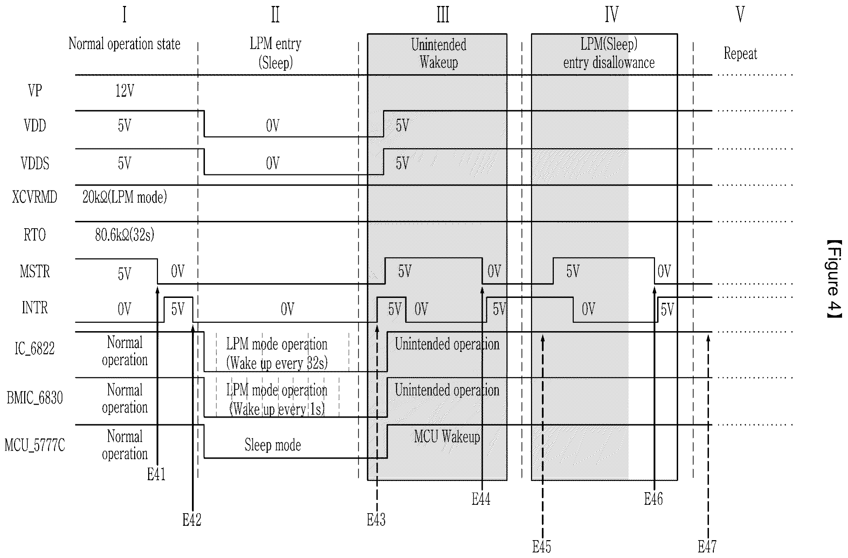

FIG. 4 is a timing diagram for illustrating the case in which the low power mode entry disallowance due to an unintended fault.

Referring to FIG. 4, the operation of the battery management system 1 when a fault not the low power mode fault, that is, the unintended fault, occurs is illustrated in a timing diagram.

In the first section I, E41 may indicate a time point at which a low-power mode entry command occurs in the master BMS, and E42 may indicate a time point at which the master BMS normally confirms the low-power mode-related communication message received from the slave BMS. That is, E41 and E42 may correspond to E31 and E32 of FIG. 3. The operation of the battery management system 1 in the first section I may be the same as the operation of the battery management system 1 in the first section I of FIG. 3. The second section II may also be the same as the second section II of FIG. 3, and thus a redundant description thereof will be omitted.

In the third section III, E43 indicates a time point at which a wake-up due to an unintended fault occurs. The unintended fault may indicate a case in which there is abnormality in parameter values, such as communication disconnection and connector damage. Since an unintended fault has occurred in E43, the signal of the INTR terminal of the transceiver 11 may transition from the second voltage level to the first voltage level. The processor 10, the transceiver 11, and the BMICs 13a and 13b may be woken up due to the interrupt signal generated in this way.

That is, the transceiver 11 indicated with "IC_6822", the BMICs 13a and 13b indicated with "BMIC_6830," and the processor 10 indicated with "MCU_5777C" may perform the normal operation again, and a voltage of 5V is applied again to the VDD terminal and the VDDS terminal of the processor 10, and the signal of the MSTR terminal of the transceiver 11 may transition from the second voltage level to the first voltage level. Further, the signal of the INTR terminal of the transceiver 11 may transition from the first voltage level to the second voltage level again.

E44 indicates the time point at which the low power mode entry command occurs in the master BMS. At the time point E44, the signal of the MSTR terminal of the transceiver 11 may transition from the first voltage level to the second voltage level. Since the low power mode fault is not caused, the low power mode entry command for the master BMS occurs, and accordingly, the battery management system 1 needs to enter the low power mode again. However, in a situation where the unintended fault is not resolved, the signal of the INTR terminal of the transceiver 11 may transition again from the second voltage level to the first voltage level.

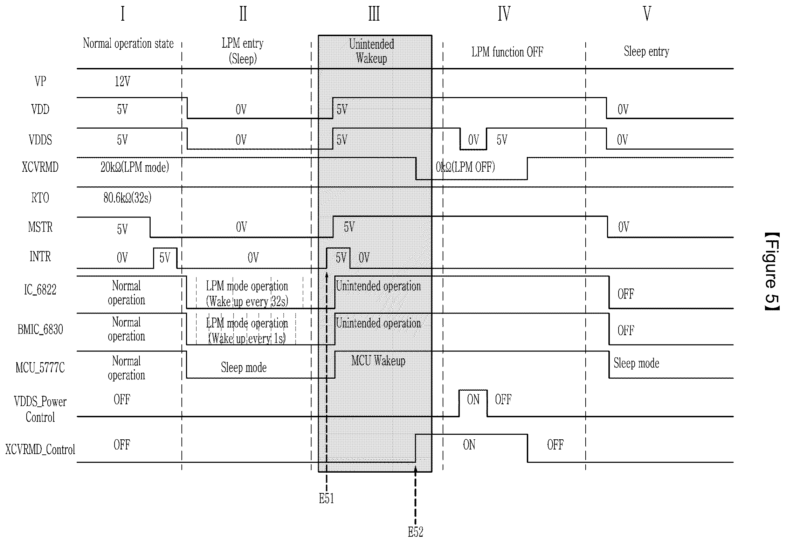

Accordingly, in the fourth section IV, the transceiver 11 indicated with IC_6822," the BMICs 13a and 13b indicated with "BMIC_6830," and the processor 10 indicated with "MCU_5777C" may fail to enter the low power mode. Thereafter, even when the low power mode entry command occurs again in the master BMS in E46, in the fifth section V, as indicated with E47, the transceiver 11 indicated with IC_6822," the BMICs 13a and 13b indicated with "BMIC_6830," and the processor 10 indicated with "MCU_5777C" may still fail to enter the low power mode. A method of improving this problem will be described with reference to FIG. 5.

FIG. 5 is a timing diagram for illustrating the operation of the battery management system according to the exemplary embodiment.

Referring to FIG. 5, the operation of the battery management system 1 when a fault not the low power mode fault, that is, the unintended fault, occurs is illustrated in a timing diagram.

The difference from the timing diagram of FIG. 4 is that the VDDS_PowerControl signal and the XCVRMD_Control signal are additionally illustrated. Referring to FIG. 1 together, the VDDS_PowerControl terminal is a terminal of the processor 10 outputting a signal for controlling the transistor T1, and the XCVRMD_Control terminal is a terminal of the processor 10 outputting a signal for controlling the transistor T2. By controlling the transistor T1 through the VDDS_PowerControl signal, power VDDS for determining the operation of the low power mode may be selectively provided, and by controlling the transistor T2 through the XCVRMD_Control signal, the XCVRMD terminal may be connected to a 20 kΩ resistor or 0 kΩ.

In the first section I and the second section II, except that both the VDDS_PowerControl signal and the XCVRMD_Control signal are set to the OFF state, the remaining signals may operate in the same manner as in the first section I and the second section II of FIG. 4. Therefore, redundant descriptions are omitted.

In the third section III, E51 indicates a time point at which a wake-up due to an unintended fault occurs. The unintended fault may indicate a case in which there is abnormality in parameter values, such as communication disconnection and connector damage. Since an unintended fault has occurred in E51, the signal of the INTR terminal of the transceiver 11 may transition from the second voltage level to the first voltage level. The processor 10, the transceiver 11, and the BMICs 13a and 13b may be woken up due to the interrupt signal generated in this way.

Next, E52 indicates a time point at which the low power mode function starts to be switched to the OFF state in order to eliminate an abnormal low power mode operation. Specifically, in E52, the XCVRMD_Control signal may transition from the OFF state to the ON state. Accordingly, the XCVRMD terminal may be changed to the state in which 0 kΩ is connected.

Subsequently, in the fourth section IV, while the XCVRMD terminal indicates that the low power mode is in the OFF state, the VDDS_PowerControl signal may transition from the OFF state to the ON state. Accordingly, the voltage may not be applied to the VDDS terminal. Next, while the VDDS_PowerControl signal transitions from the ON state to the OFF state, the voltage may be applied again to the VDDS terminal. At the time when the voltage is applied to the VDDS signal, the value of the XCVRMD terminal may be captured, and the battery management system 1 may be set to not use the low power mode by the captured value. Subsequently, the XCVRMD_Control signal returns from the ON state to the OFF state, and accordingly, the XCVRMD terminal may be changed to a state in which 20 kΩ is connected.

Now, in the fifth section, a low-power mode entry command occurs in the master BMS, and accordingly, the signal of the MSTR terminal of the transceiver 11 may transition from the first voltage level to the second voltage level. In addition, the transceiver 11 indicated with "IC_6822", the BMICs 13a and 13b indicated with "BMIC_6830," and the processor 10 marked with "MCU_5777C" may enter the low-power mode again.

According to the exemplary embodiments, even when the BMS is in the sleep mode, it is possible to accurately diagnose the thermal runaway of the battery to reduce casualties and property damage. In particular, it is possible to solve the problem of failure to enter the sleep mode again after the battery management system wakes up in the low power mode due to unintended faults, such as communication disconnection and connector damage, rather than cell voltage and temperature changes. In addition, by solving this problem, it is possible to prevent the vehicle's lead storage battery from being discharged because of failure to enter the sleep mode.

While this invention has been described in connection with what is presently considered to be practical exemplary embodiments, it is to be understood that the invention is not limited to the disclosed exemplary embodiments.

## Claims

1. A battery management system comprising:
a battery monitoring IC (BMIC) for measuring a state of a battery;
a processor for controlling an overall operation of the battery management system;
a transceiver for recognizing the measured state of the battery and delivering the recognized state of the battery to the processor; and
a power management circuit for providing power to the processor,
wherein the processor includes a first terminal that outputs a first signal that controls a first transistor, and provides a power signal for determining an operation of a low-power mode by controlling the first transistor by using the first signal.

2. The battery management system of claim 1, wherein:
the processor further includes a second terminal outputting a second signal for controlling a second transistor, and controls the second transistor by using the second signal to change a resistance value connected to a third terminal indicating whether to use the low power mode.

3. The battery management system of claim 2, wherein:
a value of a signal of the third terminal is detected when a voltage level of the power signal transitions.

4. The battery management system of claim 2, wherein:
when an unintended fault occurs, a signal of a fourth terminal of the transceiver transitions from a second voltage level to a first voltage level, and
the processor, the transceiver, and the BMIC wake up.

5. The battery management system of claim 4, wherein:
the second signal output from the second terminal transitions from an OFF state to an ON state after the processor, the transceiver, and the BMIC wake up, and
a resistance value connected to the third terminal is changed to a state in which 0 kΩ is connected.

6. The battery management system of claim 5, wherein:
while the resistance value connected to the third terminal is in the state in which 0 kΩ is connected, the first signal output from the first terminal transitions from an OFF state to an ON state, and
is changed so that no voltage is applied to a power terminal.

7. The battery management system of claim 6, wherein:
the first signal output from the first terminal transitions from the ON state to the OFF state,
a voltage is applied to the power terminal again,
when the voltage is applied to the power terminal again, the value of the third terminal is captured, and
the battery management system is set not to use the low power mode by the captured value.

8. The battery management system of claim 7, wherein:
the second signal output from the second terminal returns from the ON state to the OFF state, and
a resistance value connected to the third terminal is changed to a state in which 20 kΩ is connected.

9. The battery management system of claim 8, wherein:
when a low-power mode entry command occurs, a signal of a fifth terminal of the transceiver, which is provided with an output indicating whether the processor is in a normal operation state or a low-power mode entry state, transitions from a first voltage level to a second voltage level, and
the processor, the transceiver, and the BMIC enter the low power mode again.

10. A battery management method by a battery management system, the battery management system including:
a battery monitoring IC (BMIC) for measuring a state of a battery;
a processor for controlling an overall operation of the battery management system, and including a first terminal outputting a first signal controlling a first transistor and a second terminal outputting a second signal a second transistor;
a transceiver for recognizing the measured state of the battery and delivering the recognized state of the battery to the processor; and
a power management circuit for providing power to the processor, the battery management method comprising:
providing, by the processor, a power signal for determining an operation of a low-power mode by controlling the first transistor by using the first signal; and
changing a resistance value connected to a third terminal indicating whether to use the low power mode by controlling the second transistor by using the second signal.

11. The battery management method of claim 10, wherein:
a value of a signal of the third terminal is detected when a voltage level of the power signal transitions.

12. The battery management method of claim 10, further comprising:
when an unintended fault occurs, transitioning a signal of a fourth terminal of the transceiver from a second voltage level to a first voltage level; and
waking up the processor, the transceiver, and the BMIC.

13. The battery management method of claim 12, further comprising:
transitioning the second signal output from the second terminal transitions from an OFF state to an ON state after the processor, the transceiver, and the BMIC wake up; and
changing a resistance value connected to the third terminal to a state in which 0 kΩ is connected.

14. The battery management method of claim 13, further comprising:
while the resistance value connected to the third terminal is in the state in which 0 kΩ is connected, transitioning the first signal output from the first terminal from an OFF state to an ON state; and
changing so that no voltage is applied to a power terminal.

15. The battery management method of claim 14, further comprising:
transitioning the first signal output from the first terminal from the ON state to the OFF state;
applying a voltage to the power terminal again;
when the voltage is applied to the power terminal again, capturing the value of the third terminal; and
setting the battery management system not to use the low power mode by the captured value.

16. The battery management method of claim 15, further comprising:
returning the second signal output from the second terminal from the ON state to the OFF state again; and
changing a resistance value connected to the third terminal to a state in which 20 kΩ is connected.

17. The battery management method of claim 16, further comprising:
when a low-power mode entry command occurs, transitioning a signal of a fifth terminal of the transceiver, which is provided with an output indicating whether the processor is in a normal operation state or a low-power mode entry state, from a first voltage level to a second voltage level; and
entering the processor, the transceiver, and the BMIC the low power mode again.
